Europäisches Patentamt

European Patent Office

Office européen des brevets

(19)

(11) Veröffentlichungsnummer: **0 295 428**
**B1**

(12) **EUROPÄISCHE PATENTSCHRIFT**

(45) Veröffentlichungstag der Patentschrift: **30.01.91**

(21) Anmeldenummer: **88107574.1**

(22) Anmeldetag: **11.05.88**

(51) Int. Cl.$^5$: **B 60 K 15/077, F 02 M 37/04**

(54) **Staustopf für Kraftstoffbehälter.**

(30) Priorität: **13.06.87 DE 3719808**

(43) Veröffentlichungstag der Anmeldung:
**21.12.88 Patentblatt 88/51**

(45) Bekanntmachung des Hinweises auf die
Patenterteilung:
**30.01.91 Patentblatt 91/05**

(84) Benannte Vertragsstaaten:
**ES FR GB IT SE**

(56) Entgegenhaltungen:
**EP-A-0 128 504**
**DE-A-2 804 551**
**DE-A-3 225 929**
**DE-A-3 500 718**
**DE-A-3 615 214**
**DE-C-2 401 728**
**DE-C-3 612 194**

(73) Patentinhaber: **DAIMLER-BENZ
AKTIENGESELLSCHAFT
Mercedesstrasse 136
D-7000 Stuttgart 60 (DE)**

(72) Erfinder: **Scheurenbrand, Dieter
Hauffstrasse 21
D-7448 Wolfschlugen (DE)**
Erfinder: **Wawra, Helmut, Dr.
Weishaarstrasse 43
D-7054 Korb (DE)**
Erfinder: **Kleineberg, Wolfgang
Hofwiesenweg 50
D-7305 Altbach (DE)**

Courier Press, Leamington Spa, England.

EP 0 295 428 B1

**Beschreibung**

Die Erfindung betrifft einen Stautopf für Kraftstoffbehälter, mit den Merkmalen des Oberbegriffes von Patentanspruch 1.

Ein Stautopf dieser Art ist aus der DE—C—24 01 728 bekannt. Bei dieser Konstruktion befindet sich die der Injektordüse nachgeordnete, bodennahe Topföffnung an einem topfaußenseitig zugänglichen Stirnende des Gasabscheideraumes, der mit seinem anderen Stirnende in den Topfinnenraum einmündet. Die Öffnung der Topfoberwand, die sowohl den Topfinnenraum als auch den Gasabscheideraum oben verschließt, befindet sich in der Oberwandmitte.

Der für die Kraftstoffversorgung von Brennkraftmaschinen, insbesondere solchen mit Kraftstoffeinspritzung, nicht verbrauchte Kraftstoff wird üblicherweise insbesondere auf seinem Rückflußweg entlang heißer Zonen erwärmt, wobei dann in der Kraftstoffleitung Gasblasen entstehen. Beim Eintritt des durch diesen Kraftstoff gebildeten Saugstrahles in den Gasabscheideraum entspannen sich die Gasblasen, schwimmen auf und werden durch die Strömung in den Topfinnenraum mitgeschwemmt. Aus diesem entweichen sie über die zentrale Öffnung der Topfoberwand und gelangen in den Kraftstoffbehälter.

Sofern nun das Niveau des Kraftstoffes im Kraftstoffbehälter die Höhe des Stautopfes wesentlich übersteigt, steigen die Gasblasen im Kraftstoff auf, was mit mehr oder weniger starken, in der Fahrgastzelle hörbaren und deshalb störenden Blubbergeräuschen verbunden ist.

Es ist deshalb Aufgabe der vorliegenden Erfindung, einen Stautopf in einer im Oberbegriff des Patentanspruches 1 erläuterten Ausbildung so zu verbessern, daß Gasblasen innerhalb des Kraftstoffbehälters keine störenden Geräusche mehr verursachen können.

Diese Aufgabe wird erfindungsgemäß durch die kennzeichnenden Merkmale des Patentanspruches 1 gelöst.

Bei einem solchen Stautopf kann sich zurückfließender Kraftstoff innerhalb des Gasabscheideraumes während des Entlangströmens längs der Kraftstoffführungsfläche beruhigen und entgasen, wobei das Gas im Gasabscheideraum gefangen und über die Entgasungsleitung geräuschfrei in den oberen, von Kraftstoff freien Teil des Kraftstoffbehälters abgeleitet wird.

Die Merkmale des Patentanspruches 2 stellen auch bei verhältnismäßig hoher Strömungsgeschwindigkeit des zurückfließenden Kraftstoff innerhalb des Gasabscheideraumes eine einwandfreie Entgasung sicher.

Eine Ausführungsform nach Anspruch 3 hat eine begünstigende Wirkung auf die Beruhigung des Kraftstoffs zur Entgasung im Gasabscheideraum zur Folge. Eine Ausführungsform gemäß den Patentansprüchen 4 und 5 bietet den Vorteil, mit Hilfe des zurückfließenden Kraftstoffes auch bei verhältnismäßig langer Entgasungsstrecke noch eine ausreichende Saugwirkung zum Ansaugen von Kraftstoff aus dem Kraftstoffbehälter zielen zu können.

Eine Ausgestaltung der Erfindung nach Anspruch 6 ermöglicht bei besonders kompakter Ausbildung des Stautopfes dessen Ausstattung mit einer verhältnismäßig langen Entgasungsstrecke.

In der Zeichnung ist ein Ausführungsbeispiel der Erfindung dargestellt. Es zeigen:

Fig. 1 einen in Höhe und Länge verkürzt dargestellten Längsschnitt eines mit einem erfindungsgemäßen Stautopf ausgestatteten Kraftstoffbehälters,

Fig. 2 eine Ansicht des Stautopfes in Richtung des Pfeiles A der Fig. 1 gesehen,

Fig. 3 eine Draufsicht des Stautopfes,

Fig. 4 einen Teilschnitt entlang der Linie IV-IV der Fig. 2, und

Fig. 5 einen Teilschnitt entlang der Linie V-V der Linie V-V der Fig. 3.

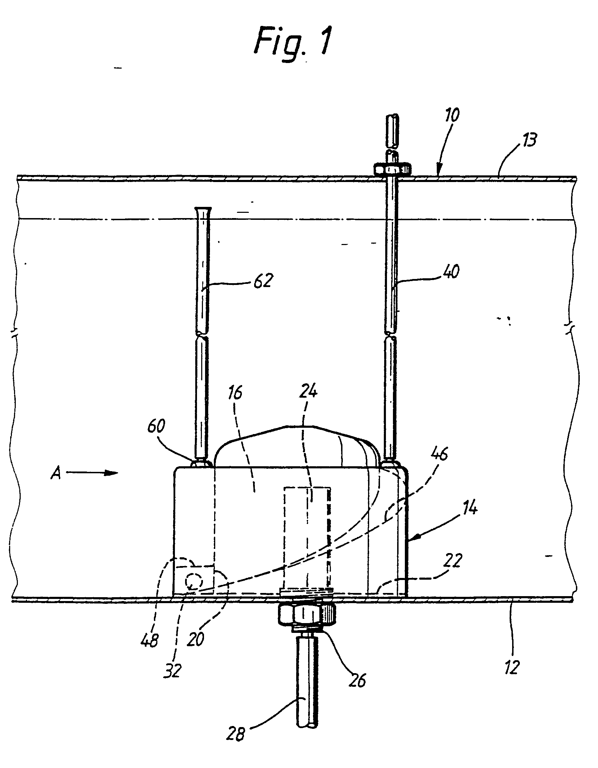

In Fig. 1 ist als Ganzes mit 10 ein Kraftstoffbehälter eines Kraftfahrzeuges bezeichnet, das mittels einer Brennkraftmaschine mit Kraftstoffeinspritzung betrieben wird. Auf dem Boden 12 des Kraftstoffbehälters 10 sitzt ein Stautopf 14, aus dessen in der Folge als Ansaugkammer bezeichnetem Topfinnenraum 16 beim Betrieb der Brennkraftmaschine ständig Kraftstoff abgezogen wird. Die Ansaugkammer 16 weist oben eine zentrale Öffnung 18, eine Kammerwand 20 sowie einen Topfboden 22 auf, in dessen Zentrum ein von unten in die Ansaugkammer 16 hineinragender Saugfilter 24 sitzt. Ebensogut könnte ein Saugfilter auch durch die obere, zentrale Öffnung 18 hindurchgeführt und der Topfboden 22 geschlossen ausgebildet sein.

Der Saugfilter 24 durchsetzt mit einem Anschlußnippel 26 den Boden 12 des Kraftstoffbehälters 10, an dem ein zu einer Kraftstoffeinspritzpumpe führender Ansaugschlauch 28 angeschlossen ist.

Die Ansaugkammer 16 ist ständig mit Kraftstoff gefüllt. Befindet sich genügend Kraftstoff im Kraftstoffbehälter 10, läuft die Ansaugkammer 16 über deren obere, zentrale Öffnung 18 von selbst voll. Damit jedoch auch dann, wenn der Kraftstoffbehälter 10 nur noch wenig Kraftstoff enthält, die Ansaugkammer 16 stets gefüllt bleibt, ist der Stautopf 14 mit einer Strahlpumpe 30 ausgestattet, mit deren Hilfe im Bodenbereich des Kraftstoffbehälters 10 aus diesem während des Betriebs der Brennkraftmaschine ständig Kraftstoff abgezogen und der Ansaugkammer zugeführt wird. Diese Strahlpumpe 30 sitzt im Bereich des Topfbodens 22 an der Außenseite der Kammerwand 20 und ist durch eine Injektordüse 32 und einen sich an diese anschließenden, sich in Förderrichtung in etwa trompetenförmig erweiternden Kanal 34 gebildet. Letzterer erstreckt sich längs eines äußeren Umfangteils der Kammerwand 20, die bei 36 endet und zusammen mit einer weiteren, zur Kammerwand 20 im wesentlichen konzentrischen Kammerwand 38 die Ansaugkammer 16 umschließt.

Die Strahlpumpe 30 wird mittels Kraftstoff betrieben, der für den Betrieb der Brennkraftmaschine nicht benötigt wird. Dieser überschüssige Kraftstoff wird über eine vorzugsweise die obere Wand 13 des Kraftstoffbehälters 10 durchsetzende Kraftstoffrückflußleitung 40 der Injektordüse 32 des Stautopfes 14 zugeführt, wobei der aus ihr austretende und in das Hinterende des Kanals 34 gerichtete Kraftstoffstrahl in der Umgebung der Injektordüse 32 einen Unterdruck erzeugt und im Kraftstoffbehälter 10 vorhandenen Kraftstoff in den Kanal 34 mitreißt und der Ansaugkammer 16 zuführt.

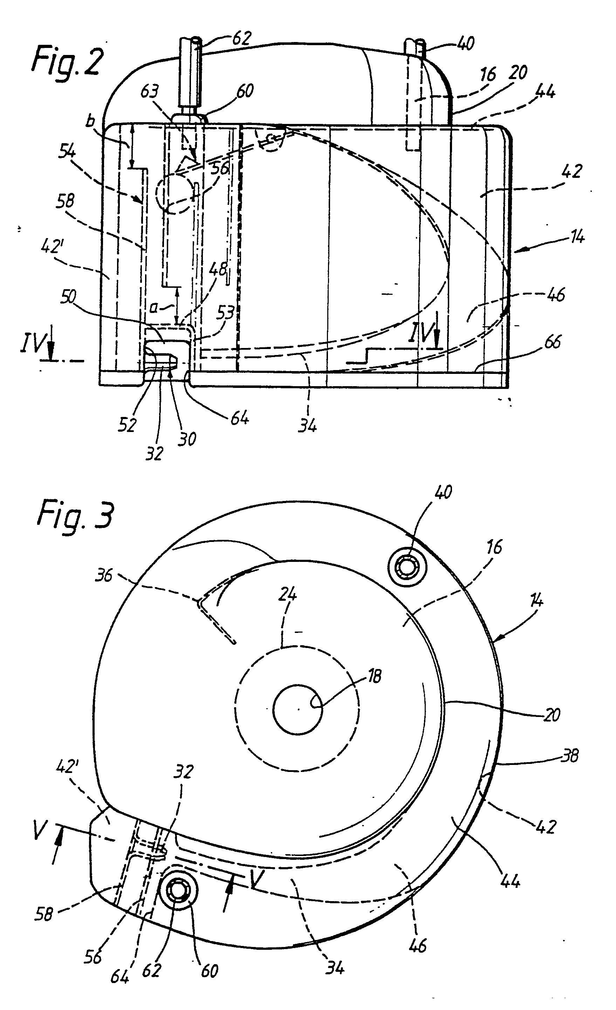

Der überschüssige Kraftstoff gelangt dabei über die Kraftstoffrückflußleitung 40 zunächst in einen Gasabscheideraum 42, der durch die beiden seitlichen Kammerwände 20, 38, durch eine Oberwand 44 sowie durch eine den Raumboden bildene und vorzugsweise durch eine Schrägfläche 46 gebildete Kraftstofführungsfläche begrenzt ist (siehe Fig. 2).

Wie die Zeichnung zeigt, folgt die Schrägfläche 46 in ihrem Verlauf zwischen den beiden Kammerwänden 20, 38 einer Wendel und fällt in Richtung auf die Injektordüse 32 ab. In deren Bereich bildet die Schrägfläche 46 eine sich quer zur Strömungsrichtung des über sie herabströmenden, überschüssigen Kraftstoffes erstreckende Stufe 48, durch die unterhalb derselben ein sich seitlich am Stautopf 14 in den Kraftstoffbehälter 10 öffnender Raum 50 ausgebildet ist, in welchen sich die Injektordüse 32 hineinerstreckt.

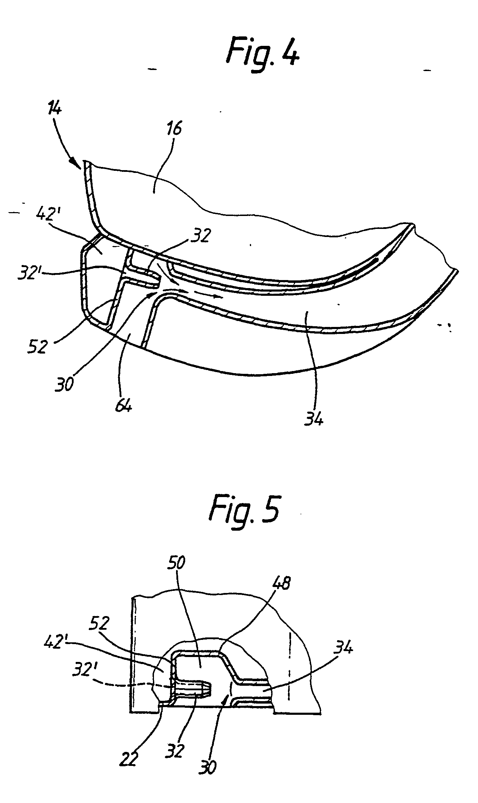

Diese durchsetzt, in Strömungsrichtung der Strahlpumpe 30 gesehen, die hintere, in den Topfboden 22 übergehende Stufenwandung 52 und ist in dieser gehalten (Fig. 4). Der Gasabscheideraum 42 erstreckt sich also bis hinter die Stufenwandung 52, so daß das die Eintrittsöffnung aufweisende Hinterende 32' der Injektordüse 32 sich innerhalb des Gasabscheideraumes 42 befindet.

Wie aus Fig. 2 ersichtlich ist, ist innerhalb des Gasabscheideraumes 42 undoberhalb bzw. im Bereich der Stufe 48 vorzugsweise noch eine als Ganzes mit 54 bezeichnete Gasblasenrückhaltevorrichtung vorgesehen. Im vorliegenden Falle ist sie vorzugsweise durch mindestens zwei aufrechte, in Strömungsrichtung des überschüssigen Kraftstoffes im Abstand hintereinander und etwa parallel zueinander angeordnete, den Gasabscheideraum 42 quer zur Kraftstoffströmungsrichtung abteilende Kraftstofführungswände 56 und 58 gebildet. Von diesen enden die von der Oberwand 44 ausgehenden in einem Abstand a oberhalb der Stufe 48 und die sich von der Stufe 48 aus nach oben erstreckenden in einem Abstand b unterhalb der Oberwand 44 des Gasabscheideraumes 42. Die Gasblasenrückhaltevorrichtung 54 könnte selbstverständlich auch in einer anderen Ausbildung, beispielsweise in Art eines feinmaschigen Siebes, vorgesehen sein.

Mit 60 ist ein in der Oberwand 44 angeordneter Anschlußstutzen für eine Entgasungsleitung 62 bezeichnet, der vorzugsweise unmittelbar vor der Gasblasenrückhaltevorrichtung 54 plaziert ist.

Entgasungsleitung 62 ist gemäß Fig. 1 innerhalb des Kraftstoffbehälters 10 in geeigneter Weise nach oben geführt und mündet in einen bei maximal gefülltem Kraftstoffbehälter 10 kraftstofffreien oberen Behälterbereich aus.

Wie Fig. 2 zeigt, nimmt der Querschnitt des Gasabscheideraumes 42 in Strömungsrichtung des zurückfließenden Kraftstoffes zu, wodurch sich dessen Fließgeschwindigkeit in Richtung auf die Stufe 48 aufgrund eines zunehmenden Reibungswiderstandes bis zu einem Kleinstwert vermindert. Dies begünstigt eine sich im Gasabscheideraum 42 vollzehende Entgasung des über die Kraftstoffrückflußleitung 40 in diesen Raum einströmenden heißen, mit durch verdampften Kraftstoff gebildeten Gasblasen durchsetzten Kraftstoffes. Die Führung des Kraftstoffes entlang des Außenumfanges der Kammerwand 20 sowie die Anordnung der Anschlußstelle der Kraftstoffrückflußleitung 40 am Gasabscheideraum 42 diametral zur Anschlußstelle der Entgasungsleitung 62 sowie dessen Ausstattung mit der Gasblasenrückhaltevorrichtung 54 ermöglicht es, bei kompakter Bauweise des Stautopfes 14 die Entgasungsstrecke entsprechend lang auszulegen und dadurch eine intensive Kraftstoffentgasung zu erzielen. Dabei sammelt sich das Gas im oberen Bereich des Gasabscheideraumes 42 und kann über die Entgasungsleitung 62 in den kraftstofffreien oberen Teil des Kraftstoffbehälters 10 abfließen.

Bevor dabei der entgaste Kraftstoff zwischen den beiden Kraftstofführungswänden 56 und 58 nach oben geführt und anschließend in dem die größte Höhe aufweisenden Teil 42' des Gasabscheideraumes 42 wieder nach unten fließen wird, wird der Kraftstoff, sobald er auf die vordere Stufenwandung 53 auftrifft, verwirbelt, wodurch im Kraftstoff noch vorhandene kleinste Gasbläschen von diesem separiert werden und entlang der der Schrägfläche 46 zugewandten Seite der Kraftstofführungswand 56 nach oben schwimmen können.

Der in den Teil 42' des Gasabscheideraumes 42 einfließende Kraftstoff durchströmt die Injektordüse 32, wobei der dabei diese verlassende und in den Kanal 34 gerichtete Kraftstoffstrahl über eine seitliche Öffnung 64 (Fig. 4) des sich unterhalb der Stufe 48 befindenden Raumes 50 im Kraftstoffbehälter 10 vorhandenen Kraftstoff mitreißt, der Ansaugkammer 16 zuführt und diese dadurch ständig in maximal gefülltem Zustand hält.

Wie insbesondere aus den Fig. 2 und 4 zu ersehen ist, ist der Kraftstoffstrahl der Injektordüse 32 vorzugsweise der Strömungsrichtung des Kraftstoffes bereichsweise entlang der Schrägfläche 46 entgegengerichtet und der sich in Fließrichtung trompetenförmig öffnende Kanal 34 der Strahlpumpe 30 verläuft unterhalb der Schrägfläche 46. Somit bilden die Kammerwände 20, 38 sowie der Topfboden 22 und der die Schrägfläche 46 bildende Boden des Gasabscheideraumes 42 vorzugsweise bereichsweise auch Wandteile des Kanales 34. Dadurch konnte die angestrebte kompakte Auslegung der Stautopfabmessungen noch optimiert werden.

Dem Anschlußstutzen 60 der Entgasungsleitung 62 ist innerhalb des Gasabscheiderraumes 42 vorzugsweise noch ein Schwimmerventil 63 zugeordnet, durch das verhindert wird, daß bei großen Rücklaufmengen überschüssigen Kraftstoffes bzw. bei maximal gefülltem Gasabscheiderraum 42 über die Entgasungsleitung 62 Kraftstoff abströmen und durch diese Leckmenge der Wirkungsgrad der Strahlpumpe 30 gemindert werden kann.

Die Konstruktion des Stautopfes 14 ist vorzugsweise derart getroffen, daß dieser als Formkörper aus geeignetem Kunststoff im Spritzverfahren kostensparend hergestellt werden kann. Zu diesem Zweck ist der Stautopf 14 durch beispielsweise drei voneinander getrennt durchführbare Spritzoperationen herstellbar, wobei die drei dadurch anfallenden Teilstücke nachträglich entsprechend zusammen zu setzen sind. Im vorliegenden Falle bildet hierzu der Topfboden 22 eines und der restliche obere Teil des Stautopfes 14 die beiden anderen Formteile. Die untere Trennfuge der beiden Formteile ist in Figur 2 mit 66 bezeichnet.

**Patentansprüche**

1. Stautopf für Kraftstoffbehälter, mit einer Oberwand, dieeineinseitliche Wandteile und eine untere Kraftstofführungsfläche aufweisenden, mit einer oberhalb des maximalen Kraftstoffniveaus in dieser vorgesehenen Öffnung in Verbindung stehenden Gasabscheiderraum oben abschließt, dem über eine Kraftstoffrückflußleitung zurückfließender Kraftstoff zuführbar ist, und mit einer bodennahen Topföffnung, über die durch einen mittels einer Injektordüse durch zurückfließenden Kraftstoff erzeugten Saugstrahl aus dem im Kraftstoffbehälter vorhandenen Kraftstoffvorrat Kraftstoff in den Topfinnenraum absaugbar ist,

dadurch gekennzeichnet, daß der Gasabscheiderraum (42) vom Topfinnenraum (16) getrennt ist und daß an der in seiner Oberwand (44) vorgesehenen Öffnung eine vom Gasabscheiderraum (42) wegführende und oberhalb des maximalen Kraftstoffniveaus in den Kraftstoffbehälter (10) ausmündende Entgasungsleitung (62) und am Gasabscheiderraum (42) die Injektordüse (32) angeschlossen sind.

2. Stautopf nach Anspruch 2, dadurch gekennzeichnet, daß im Gasabscheiderraum (42) vor der Injektordüse (32) eine Gasblasenrückhaltevorrichtung (54) angeordnet ist.

3. Stautopf nach Anspruch 1 oder 2, dadurch gekennzeichnet, daß der Querschnitt des Gasabscheiderraumes (42) in Strömungsrichtung des Kraftstoffes zunimmt.

4. Stautopf nach einem der vorhergehenden Ansprüche, dadurch gekennzeichnet, daß die Kraftstofführungsfläche eine als in Richtung auf die Injektordüse (32) abfallende Schrägfläche (46) ausgebildete Entgasungsstrecke definiert.

5. Stautopf nach Anspruch 4, dadurch gekennzeichnet, daß die Jnjektordüse (32), bezogen auf die Strömungsrichtung des Kraftstoffes entlang der Schrägfläche (46), in einem Abstand hinter dem unteren Schrägflächenende am Gasabscheiderraum (42) angeschlossen ist.

6. Stautopf nach einem der vorhergehenden Ansprüche, dadurch gekennzeichnet, daß der Stautopf (14) im wesentlichen kreiszylindrisch ist und daß sich der Gasabscheiderraum (42) längs eines Topfwandteiles (20) außen entlang erstreckt.

7. Stautopf nach einem der vorhergehenden Ansprüche, dadurch gekennzeichnet, daß innerhalb des Gasabscheiderraumes (42) ein Schwimmerventil (63) angeordnet ist, durch das bei einem maximalen Kraftstoffniveau die Entgasungsleitung (62) verschließbar ist.

**Revendications**

1. Pot de retenue pour réservoir de carburant, comportant une paroi supérieure, qui obture en haut un volume séparateur de gaz, comportant une partie de paroi latérale et une surface inférieure de guidage de carburant et en liaison avec une ouverture formée dans ladite surface au-dessus du niveau maximal de carburant et dans lequel peut être introduit du carburant refluant par l'intermédiaire d'un conduit de retour de carburant, le pot comportant à proximité du fond un orifice par l'intermédiaire duquel du carburant provenant de la réserve se trouvant dans le réservoir peut être aspiré à l'intérieur du pot sous l'effet d'un jet d'aspiration produit par du carburant en retour au moyen d'une buse d'injection, caractérisé en ce que le volume séparateur de gaz (42) est séparé du volume intérieur (16) du pot et en ce que l'ouverture prévue dans sa paroi supérieure (44) est reliée à un conduit de dégazage (62) partant du volume séparateur de gaz (42) et débouchant dans le réservoir de carburant (10) au-dessus du niveau maximal de carburant et à la buse d'injection (32) est reliée au volume séparateur de gaz (42).

2. Pot de retenue selon la revendication 1, caractérisé en ce que, dans le volume séparateur de gaz (42), il est prévu devant la buse d'injection (32) un dispositif (54) de retenue de bulles de gaz.

3. Pot de retenue selon la revendication 1 ou 2, caractérisé en ce que la section du volume séparateur de gaz (42) augmente dans la direction d'écoulement du carburant.

4. Pot de retenue selon une des revendications précédentes, caractérisé en ce que la surface de guidage de carburant définit une voie de dégazage agencée comme une surface (46) inclinée vers le bas en direction de la buse d'injection (32).

5. Pot de retenue selon la revendication 4, caractérisé en ce que la buse d'injection (32), en considérant la direction d'écoulement du carburant le long de la surface inclinée (46), est reliée au volume séparateur de gaz (42) à une certaine distance en arrière de l'extrémité inférieure de la surface inclinée.

6. Pot de retenue selon une des revendications précédentes, caractérisé en ce que le pot de retenue (14) a une forme sensiblement cylindrique circulaire et en ce que le volume séparateur de gaz (42) s'étend extérieurement le long d'une partie de paroi (20) du pot.

7. Pot de retenue selon une des revendications précédentes, caractérisé en ce qu'il est prévu à l'intérieur du volume séparateur de gaz (42) une soupape à flotteur (63) par laquelle peut être fermé le conduit de dégazage (62) lors d'un niveau maximal de carburant.

**Claims**

1. A retaining pot for fuel containers, with an upper wall which closes at the top a gas separation space which has a side wall part and a lower fuel guiding surface and communicates with an opening provided in the latter above the maximum fuel level, to which pot fuel flowing back along a fuel return duct can be despatched, and with a pot opening close to the bottom through which, by means of a suction jet produced by means of returning fuel with the aid of an injector nozzle from the fuel supply present in the fuel tank, fuel can be drawn into the inner space of the pot, characterized in that the gas separation space (2) is separated from the inner space (16) of the pot, and in that, at the opening provided in its upper wall (44), a degassing duct (62) leading from the gas separation space (42) aind opening out above the maximum fuel level in the fuel tank (10) is connected, whereas the injector nozzle (32) is connected at the gas separation space (42).

2. A retaining pot according to claim 1, characterized in that in the gas separation space (42) a gas bubble retaining device (54) is mounted in front of the injector nozzle (32).

3. A retaining pot according to either claim 1 or 2, characterized in that the cross section of the gas separation space (42) increases in the direction of flow of the fuel.

4. A retaining pot according to one of the foregoing claims, characterized in that the fuel guiding surface defines a degassing path designed as a slanting surface (46) falling in the direction of the injection nozzle (32).

5. A retaining pot according to claim 4, characterized in that the injector nozzle (52), relative to the direction of flow of the fuel along the slanting surface (46), is connected to the gas separation space (42) at a distance from the bottom slanting surface end.

6. A retaining pot according to one of the foregoing claims, characterized in that the retaining pot (14) is substantially circularly cylindrical, and in that the gas separation space (42) extends externally along a part (20) of the pot wall.

7. A retaining pot according to one of the foregoing claims, characterized in that, inside the gas separation space (42), a float valve (63) is mounted, by means of which the degassing duct (62) can be closed when the fuel level is at its maximum.

# Fig. 1

*Fig.2*

54
58
42'
50
b
63
56
62
60
48
a
53
IV
52
32
30
64
34
66
16 20
44
42
14
46
IV

*Fig. 3*

36
42'
V
58
56
64 62 60
32
24
18
34
V
40
16
14
20
38
42
44
46

# Fig. 4

# Fig. 5